# EUROPEAN PATENT APPLICATION

(11) **EP 4 477 854 A1**
(43) Date of publication of application: **18.12.2024**
(21) Application number: 24177626.9
(22) Date of filing: 23.05.2024
(51) Int. Cl.: F02C 3/20

(54) **FUEL SYSTEM**

(30) Priority: 16.06.2023 GB 202309032
(71) Applicant: Rolls-Royce plc, London N1 9FX (GB)
(72) Inventor: Swann, Peter, Derby, DE24 8BJ (GB)
(74) Representative: Rolls-Royce plc

(57) **Abstract**

This invention concerns a fuel delivery system for an aircraft engine, comprising a fuel delivery regulator configured to receive fuel from a plurality of fuel sources for supply to the engine. An engine operating condition sensor reading is received by a control unit configured to control operation of the regulator. The control unit is configured to actuate the regulator based on a received signal from the engine operating condition sensor in order to vary the volume of fuels from the plurality of fuel sources supplied to the engine during at least a portion of a cruise phase relative to a further portion of an aircraft flight. The different fuels may comprise kerosene and an alternative fuel, such as a biofuel.

## Description

### BACKGROUND OF THE INVENTION

The present invention relates to fuel delivery systems for engines and, more particularly, for aircraft engines.

An important focus of improvements to aircraft engine operation concerns the reduction of greenhouse gas emissions due to fuel consumption. Whilst this is a concern for the whole life-cycle of aircraft engines, there is also a more specific consideration of emissions during the cruise phase of an aircraft flight.

It is known in a general sense that the use of alternative aviation fuels can enable reduced levels of emissions from engines. Currently, alternative fuels (particularly biofuels) suffer a very significant price disadvantage in comparison with standard kerosene, and are in short supply. There are also technical limitations which prevent in many cases the complete substitution of kerosene with an alternative aircraft fuel and so, if such alternative fuels are used at all, they are typically supplied to aircraft in a predetermined blend comprising a high percentage of kerosene (representing the majority component within the blended fuel) and an alternative fuel (representing the minority component within the blended fuel).

The relative proportions of alternative fuel and kerosene within the blended fuel composition are determined by such factors as the availability and price of alternative fuel at the aircraft's departure airport, and the attitude of the aircraft operator to the use of alternative fuels which may cost significantly more per litre than standard kerosene. Regulatory limits or technical constraints may also place an upper bound on the proportion of alternative fuel that may be incorporated within the fuel blend.

It is an aim of the present invention to provide an engine fuel delivery system that can provide for a reduction in one or more environmental impact concerns. It is a further aim of the present invention provide an engine fuel delivery system that can provide for a reduction in one or more environmental impact concerns in a cost-effective manner.

### BRIEF SUMMARY OF THE INVENTION

According to a first aspect of the invention there is provided a fuel delivery system for an aircraft engine, the system comprising a fuel delivery regulator configured to receive fuel from a plurality of fuel sources for supply to the engine, an engine operating condition sensor, and a control unit configured to control operation of the regulator, wherein the control unit is configured to actuate the regulator based on a received signal from the engine operating condition sensor in order to vary the volume of fuels from the plurality of fuel sources supplied to the engine during at least a portion of a cruise phase relative to a further portion of an aircraft flight.

The volume of fuels from the plurality of fuel sources may be selected for supply to the engine at least in part based upon the particulate matter emissions and/or the gaseous emissions created by the combustion of said fuel.

Particulate matter emissions may include soot particles created by the combustion of said fuel, also known as non-volatile particulate matter (nvPM). Any reference herein to soot or smoke may apply equally to other types of particulate matter emissions known within the art. Gaseous emissions may include any one or more of nitrogen oxides (NOx), carbon monoxide (CO), carbon dioxide (CO₂), unburned hydrocarbons (UHC), sulphur oxides (SO) for example - sulphur dioxide (SO₂) and sulphur trioxide (SO₃), volatile organic compounds (VOC) created by the combustion of said fuel. Any reference herein to gaseous emissions may apply equally to other types of gaseous emissions known within the art.

The controller typically comprises machine readable instructions, such as one or more module of code and/or control algorithm, for control of the regulator with the aim of reducing engine exhaust emissions during one or more portions of the cruise phase of an aircraft flight. The invention may have the benefit/aim of reducing particulate matter emissions and/or gaseous emissions from the engine during the one or more portions of the cruise phase, relative to one or more further portions of the flight.

The engine is typically a propulsion engine such as a gas turbine engine, e.g. an axial flow engine.

Each fuel source may comprise a different fuel composition. The plurality of fuel compositions may each comprise a different aromatic content and/or other non-paraffinic content. For example, the plurality of fuel compositions may each comprise a different sulphur content, or volume of a tracer species or element.

Varying the volume of fuel supplied to the engine from the fuel sources may comprise varying the flow rate from the one or more sources. Varying the volume of fuels supplied to the engine from the fuel sources may comprise varying the ratio of fuels from said fuel sources.

The ratio of fuels may comprise entirely one fuel, for example by way of switching fuel sources, or else a mixture of the fuels from the plurality of fuel sources. Thus varying the volume of fuel supplied may comprise switching between said fuel sources.

The fuel delivery system may comprise the fuel sources. The plurality of fuel sources may or may not comprise two fuel sources. The plurality of fuel sources may be provided on the aircraft.

Each of the plurality of fuel sources may comprise a fuel tank. Each of the plurality of fuel sources may comprise a network of fluidly interconnected tanks. The plurality of fuel sources may be in fluid communication with the regulator.

The fuel contained in at least one of the plurality of fuel sources may comprise kerosene. Each of the plurality of fuel sources may comprise a distinct composition of fuel. The fuel system may output a mixture comprising a proportion of each distinct fuel composition. Each distinct composition of fuel may have a different aromatic or kerosene content.

This may provide the advantage to temporarily reduce the kerosene content of fuel burned by the engine(s) at times when it is particularly desirable to reduce soot or other particulate matter emissions and/or the gaseous emissions created by the combustion of said fuel during at least a portion of a cruise phase - e.g. when it is environmentally desirable for contrail formation to be reduced. Additionally or alternatively, this may also provide the added advantage to temporarily increase the kerosene content of fuel burned by the engine(s) at times when it is particularly desirable to increase soot or other particulate matter emissions and/or the gaseous emissions created by the combustion of said fuel during at least a portion of a cruise phase - e.g. when it is environmentally desirable for contrail formation to be strengthened or increased.

A first fuel source may comprise a default fuel, such as kerosene, and a second fuel source may comprise one or more of a biofuel, a sustainable aviation fuel, a power-to-liquid fuel, a gas-to-liquid fuel, an e-fuel, liquefied natural gas, or hydrogen.

The regulator may comprise a fuel blender or mixer. The mixer may output a substantially homogeneous fuel mixture comprising the fuels from the plurality of fuel sources. The regulator may comprise an outlet. The regulator may comprise an outlet valve. The flow of fuel into the fuel blender or mixer may be controlled by a plurality of regulator valves. The fuel blender may be configured to allow mixing of fuels from the plurality of fuel sources prior to delivery to the engine

The regulator may comprise a plurality of individual regulators. The regulator may comprise an individual regulator for each of the plurality of fuel sources. The regulator may comprise a plurality of regulators for each of the plurality of fuel sources. The regulator may comprise a regulator valve. The regulator may comprise a plurality of regulator valves. The regulator may comprise a regulator valve for each of the plurality of fuel sources.

The fuel delivery system may comprise a fuel injector. The fuel injector may be arranged to receive the fuel output from the regulator. The fuel delivery system may comprise a plurality of fuel injectors, for example, for one engine, wherein each fuel injector may be in fluid communication with a different regulator or regulator valve, e.g. for delivery of different fuel compositions to the engine. Mixing of the fuel compositions may take place within a pre-mixing chamber or within the engine combustor.

The control unit may comprise one or more computer processor. The control unit may comprise or be in communication with an engine control unit. The control unit may actuate a plurality of regulators. The control unit may be configured to receive a signal representing the total fuel flow required for the engine. The control unit may be configured to receive one or more signals from the cockpit of the aircraft. The control unit may be configured to receive data concerning the composition of each of the distinct compositions of fuel. The control unit may be configured to actuate the regulator based on the received signal from the engine operating condition sensor in order to vary the volume of fuels from the plurality of fuel sources supplied to the engine during at least a portion of the cruise phase relative to a further portion of the cruise phase.

The engine operating condition sensor may be configured to determine an engine throttle or thrust setting. The engine operating condition sensor may comprise a humidity sensor which is configured to determine an ambient relative humidity over ice. The engine operating condition sensor may additionally or alternatively comprise an altitude sensor or one or more aircraft location sensor. The aircraft location sensor may comprise one or more of a geographical location sensor and/or an altitude sensor. The engine operating condition sensor may comprise an aircraft weight-on-wheels sensor. In one example the controller may reduce the kerosene content within the fuel composition delivered to the engine with reduced engine throttle (and vice versa). The controller may reduce the kerosene content of the fuel composition delivered to the engine in the event that the engine thrust setting falls below a predetermined threshold, which may be indicative of an engine idle condition or an aircraft taxi and/or approach condition.

The engine operating condition sensor may comprise one or more sensors, which output different sensor readings according to different portions of the cruise phase.

The controller may comprise a plurality of fuel composition/regulation settings or adjustments according to different predetermined portions of the cruise phase. The settings may be predetermined settings or predetermined relative adjustments according to current engine operating conditions and/or the volumes of the different fuels on the aircraft.

The fuel delivery system may comprise an ambient condition sensor. The controller may determine an environmental impact factor value based on the ambient condition sensor and may adjust the fuel composition delivered to the engine accordingly.

The fuel delivery system may comprise a controller on the aircraft and/or a ground based controller. Either or both controller may be arranged to receive an indication of the availability of the different fuel compositions. Either or both controller may calculate relative volumes of the different fuel compositions to be loaded onto the aircraft prior to one or more flights. Additionally or alternatively, either or both controller may comprise a predetermined model of one or more aircraft flights, for example comprising a plurality of flight portions, phases, or one or more portions of flight phases (e.g. such as the cruise phase), and may predetermine a total climate warming impact and/or volume/rate of at least one fuel composition to be supplied to the engine during each phase or portion of the flight in advance. Additionally or alternatively, the model may be updated during the flight in response to sensed conditions or changes in predetermined conditions.

The fuel delivery system may calculate predicted particulate matter emissions and/or predicted gaseous emissions by the engine over one or more portions of the cruise phase based upon one or more predicted engine thrust settings. Said calculation may be used to calculate a total climate warming impact and/or determine the volume of at least one of the plurality of fuels to be delivered to the engine over the one or more portions of the cruise phase. Said calculation may incorporate data from, or be in communication with, the aircraft location sensor to calculate total climate warming impact in a given location. The given location may form a portion of the historical or planned flight path. Additionally or alternatively, said calculation may incorporate data from, or be in communication with, the humidity sensor to calculate total climate warming impact in a given location. The given location may form a portion of the historical or planned flight path. Additionally or alternatively, said calculation may incorporate measured and/or forecast meteorological data, to calculate total climate warming impact arising from emissions taking place in a given location at a given time. The given location and given time may form a portion of the historical or planned flight path.

One or more portions of the cruise phase may be defined according to changes in one or more engine operating condition therebetween such that each portion of the cruise phase is bounded by at least one threshold engine operating condition value. A summation of the predicted particulate matter emissions and/or the predicted gaseous emissions by the engine over one or more portions of the cruise phase may be performed and a proposed or default distribution of the first and/or second fuel sources over the cruise phase is amended in order to reduce the total of said summation.

The available volume of one of the plurality of fuels may have an upper limit or cost associated therewith and the proposed distribution may be amended to maximise the particulate matter emission reductions for one or more portions of the cruise phase within a cap defined by said volume limit and/or fuel cost. It will be understood that in some examples, the one or more portions of the cruise phase may separately combine to form at least a substantial part of the cruise phase. In further examples, it will be understood that the one or more portions of the cruise phase may separately combine to form the entire cruise phase. The particulate matter engine emission value may be weighted in dependence upon any or any combination of geographical, temporal or environmental considerations relative to one or more portion of the cruise phase.

A predetermined script of fuel compositions to be supplied to the engine for one or more portions of the cruise phase may be generated in advance of the flight for implementation by the control unit during the flight. A calculation of the required volumes of the plurality of fuel types for a planned flight may be calculated by, or delivered to, a ground-based fuel supply system controller. The ground-based fuel supply system controller may determine an optimal distribution of the plurality of fuels for the flight

A ground based regulator/controller may communicate a volume of the one or more fuel compositions loaded onto an aircraft. Additionally or alternatively, one or more fuel level/volume sensor on the aircraft may output the available volume of each fuel on the aircraft to the controller.

In one embodiment, there may be provided a plurality of regulators, wherein the control unit actuates a single regulator based on a received signal from the ambient atmospheric condition sensor and/or the engine sensor. The actuation of a single regulator based on ambient atmospheric conditions and/or engine state allows the contents of a single fuel source to be supplied to the engine, depending on the needs indicated by the signal from the ambient atmospheric condition sensor and/or the engine sensor.

The regulator may allow a switch from one fuel source to another, for example without allowing for blending of the different fuels over any substantial period of time. A primary fuel source may be used as a default selection. Hence the fuel-burn penalty may be negligible, but the system allows switching to a different fuel composition for one or more predetermined periods or portions of the cruise phase as necessary.

The determination of the optimal distribution of the plurality of fuels over the plurality of portions of the cruise phase may be performed by an iterative optimisation algorithm.

A fuel particulate matter emission index value for each fuel composition of the different fuel sources may be fed into a calculation of the volume of each fuel type to be delivered to the engine.

According to a second aspect of the invention, there is provided a method of controlling fuel delivery to an aircraft engine comprising: accommodating a plurality of distinct fuel sources on an aircraft; determining a desired volume of fuels from the plurality of fuel sources to be supplied to the engine during at least a portion of a cruise phase relative to a further portion of an aircraft flight in dependence upon at least one engine operating condition for each of said portions; and regulating delivery of a resultant fuel composition from said plurality of fuel sources to the engine such that the resultant fuel composition is varied between said portion of the cruise phase and said further portion of the flight.

Wherever practicable, any of the essential or preferable features defined in relation to the system of the first aspect of the invention may be applied to the method of the second aspect.

As used herein, the terms idle, taxi, take-off, climb, cruise, descent, approach, and landing (or one or more portions thereof) have the conventional meaning and would be readily understood by the skilled person. Thus, for a given gas turbine engine for an aircraft, the skilled person would immediately recognise each term to refer to one or more portions, or the entirety, of an operating phase of the engine within a given mission of an aircraft to which the gas turbine engine is designed to be attached.

In this regard, ground idle may refer to an operating phase of the engine where the aircraft is stationary and in contact with the ground, but where there is a requirement for the engine to be running. During idle, the engine may be producing between 3% and 9% of the available thrust of the engine. Taxi may refer to an operating phase of the engine where the aircraft is being propelled along the ground by the thrust produced by the engine. During taxi, the engine may be producing between 5% and 15% of available thrust. In further non-limitative examples, the engine may be producing between 6% and 12% of available thrust. In further non-limitative examples, the engine may be producing between 7% and 10% of available thrust. Take-off may refer to an operating phase of the engine where the aircraft is being propelled by the thrust produced by the engine. At an initial stage within the take-off phase, the aircraft may be propelled whilst the aircraft is in contact with the ground. At a later stage within the take-off phase, the aircraft may be propelled whilst the aircraft is not in contact with the ground. During take-off, the engine may be producing between 90% and 100% of available thrust. In further non-limitative examples, the engine may be producing between 95% and 100% of available thrust. In further non-limitative examples, the engine may be producing 100% of available thrust.

Climb may refer to an operating phase of the engine where the aircraft is being propelled by the thrust produced by the engine. During climb, the engine may be producing between 75% and 100% of available thrust. In further non-limitative examples, the engine may be producing between 80% and 95% of available thrust. In further non-limitative examples, the engine may be producing between 85% and 90% of available thrust. In this regard, climb may refer to an operating phase within an aircraft flight cycle between take-off and the arrival at cruise conditions, the arrival at cruise conditions thus defining the onset of the cruise phase, or a portion thereof, of the aircraft flight. Additionally or alternatively, climb may refer to a nominal point in, or one or more nominal periods during, an aircraft flight cycle between take-off and landing, where a relative increase in altitude is required, which may require an additional thrust demand of the engine.

As used herein, cruise conditions, which may define the cruise phase (or a portion thereof) of the aircraft flight, have the conventional meaning and would be readily understood by the skilled person.

In some examples, for a given gas turbine engine for an aircraft, cruise conditions may refer to an operating point of the engine at mid-cruise of a given mission (which may be referred to in the industry as the "economic mission") of an aircraft to which the gas turbine engine is designed to be attached. In this regard, mid-cruise may be regarded as the point in an aircraft flight cycle at which 50% of the total fuel that is burned between top of climb and start of descent has been burned (which may be approximated by the midpoint - in terms of time and/or distance - between top of climb and start of descent). Cruise conditions may thus define an operating point, phase, or portion thereof, of the flight that provides a thrust that would ensure at least a substantially steady state operation (i.e. maintaining at least a substantially constant altitude and at least a substantially constant Mach Number) of an aircraft to which it is designed to be attached, taking into account the number of engines provided to that aircraft. For example where an engine is designed to be attached to an aircraft that has two engines of the same type, at cruise conditions the engine may provide half of the total thrust that would be required for at least a substantially steady state operation of that aircraft at mid-cruise.

In other words, for a given gas turbine engine for an aircraft, cruise conditions may be defined as the operating point of the engine that provides a specified thrust (required to provide - in combination with any other engines on the aircraft - at least a substantially steady state operation of the aircraft to which it is designed to be attached at a given mid-cruise Mach Number) at the mid-cruise atmospheric conditions (defined by the International Standard Atmosphere according to ISO 2533 at the mid-cruise altitude). For any given gas turbine engine for an aircraft, the mid-cruise thrust, atmospheric conditions and Mach Number are known, and thus the operating point of the engine at cruise conditions may be clearly defined.

Purely by way of example, the forward speed at the cruise condition may be any point in the range of from Mach 0.7 to 0.9, for example 0.75 to 0.85, for example 0.76 to 0.84, for example 0.77 to 0.83, for example 0.78 to 0.82, for example 0.79 to 0.81, for example on the order of Mach 0.8, on the order of Mach 0.85 or in the range of from 0.8 to 0.85. Any single speed within these ranges may be part of the cruise condition. For some aircraft, the cruise conditions may be outside these ranges, for example below Mach 0.7 or above Mach 0.9.

Purely by way of example, the cruise conditions may correspond to standard atmospheric conditions (according to the International Standard Atmosphere, ISA) at an altitude that is in the range of from 10000m to 15000m, for example in the range of from 1 0000m to 12000m, for example in the range of from 10400m to 11600m (around 38000 ft), for example in the range of from 10500m to 11500m, for example in the range of from 10600m to 11400m, for example in the range of from 10700m (around 35000 ft) to 11300m, for example in the range of from 10800m to 11200m, for example in the range of from 10900m to 111 00m, for example on the order of 11000m. The cruise conditions may correspond to standard atmospheric conditions at any given altitude in these ranges.

Purely by way of example, the cruise conditions may correspond to a forward Mach number of 0.8 and standard atmospheric conditions (according to the International Standard Atmosphere) at an altitude of 35000ft (1 0668m). At such cruise conditions, the engine may provide a known required net thrust level. The known required net thrust level is, of course, dependent on the engine and its intended application and may be, for example, a value in the range of from 20kN to 40kN.

Purely by way of further example, the cruise conditions may correspond to a forward Mach number of 0.85 and standard atmospheric conditions (according to the International Standard Atmosphere) at an altitude of 38000ft (11582m). At such cruise conditions, the engine may provide a known required net thrust level. The known required net thrust level is, of course, dependent on the engine and its intended application and may be, for example, a value in the range of from 35kN to 65kN.

In use, a gas turbine engine described and/or claimed herein may operate at the cruise conditions defined elsewhere herein. Such cruise conditions may be determined by the cruise conditions (for example the mid-cruise conditions) of an aircraft to which at least one (for example 2 or 4) gas turbine engine may be mounted in order to provide propulsive thrust.

Furthermore, the skilled person would immediately recognise either or both of descent and approach to refer to an operating phase within an aircraft flight cycle between cruise and landing of the aircraft, with approach in particular forming part of the landing and take-off (LTO) phase. During either or both of descent and approach, the engine may be producing between 0% and 50% of available thrust. In further non-limitative examples, the engine may be producing between 25% and 40% of available thrust. In further non-limitative examples, the engine may be producing between 30% and 35% of available thrust. Additionally or alternatively, descent may refer to a nominal point in an aircraft flight cycle between take-off and landing, where a relative decrease in altitude is required, and which may require a reduced thrust demand of the engine.

According to an aspect, there is provided an aircraft comprising a gas turbine engine as described and/or claimed herein. The aircraft according to this aspect is the aircraft for which the gas turbine engine has been designed to be attached. Accordingly, cruise conditions according to this aspect may correspond to an operating point, phase, or portion thereof, of the aircraft flight, as defined elsewhere herein.

### BRIEF DESCRIPTION OF THE DRAWINGS

Practicable embodiments of the invention are described in further detail below by way of example only with reference to the accompanying drawings, of which:
Figure 1 shows a fuel delivery system according to one example of the invention;
Figure 2 shows a fuel delivery system according to a second example of the invention;
Figure 3 shows a fuel delivery system according to a third example of the invention;
Figure 4 shows a data flow diagram of a process for determining the suitability of fuel compositions for use in accordance with one implementation of the invention;
Figure 5 shows a ground-based system for controlling/managing delivery of fuel to a plurality of aircraft;
Figure 6A shows an example of different phases of an aircraft flight;
Figure 6B shows a further example of different phases of an aircraft flight;
Figure 6C shows a yet further example of different phases of an aircraft flight; and,
Figure 7 shows a method of controlling fluid delivery to an aircraft engine according to one example of the invention.

### DETAILED DESCRIPTION OF THE INVENTION

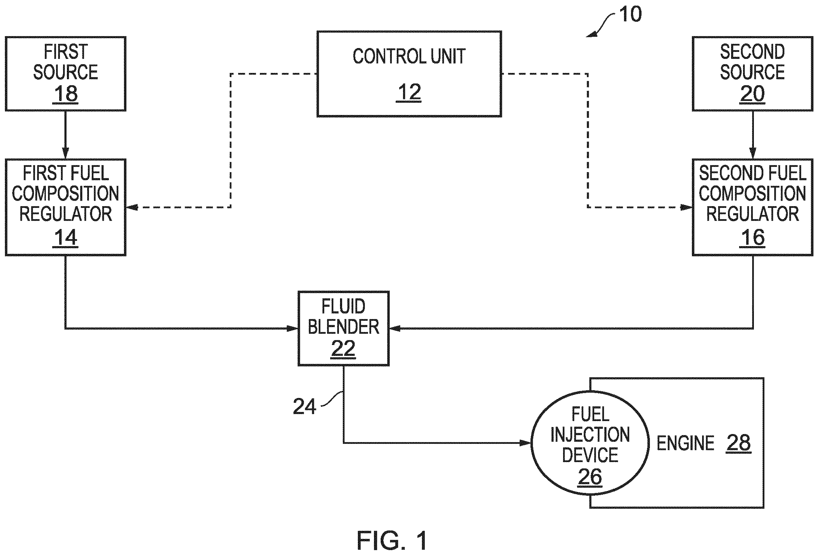

Figure 1 shows a diagrammatic representation of a fuel system 10 installed on board an aircraft. The arrows with solid lines indicate the fuel flow communication path, and the arrows with dashed lines indicate signal communication routes.

The fuel system 10 has a control unit 12 which is in signal communication with a first fuel composition regulator 14 and a second fuel composition regulator 16. Each fuel composition regulator 14, 16 is in fluid communication with a source 18, 20 of its respective fuel composition. The source of the first fuel composition is a first tank 18 for storage of a first fuel composition, and the source of the second fuel composition is a second tank 20 for storage of a second fuel composition. The number of fuel composition regulators and/or fuel tanks is dependent upon the number of fuel compositions with which the system is configured to operate and could, for example, include a third or fourth regulator/tank or more as necessary.

The tanks 18, 20 are located on board the aircraft and are fluidly isolated from one another. That is to say, the tanks are not in fluid communication with each other, and there is no flow of fluid between them. The word "tank" is intended to mean an individual tank or a network of fluidly interconnected tanks, where each tank/network is fluidly isolated from the other respective tanks/networks.

The fuel system 10 further comprises a fluid blender 22 in fluid communication with the source 18 of the first fuel composition and the source 20 of the second fuel composition (and others, if present) via the respective regulators 14, 16. The blender 22 is configured to mix the fuel compositions delivered to it from the regulators to produce a resultant fuel composition.

The fluid blender 22 has at least one outlet 24 for delivering the resultant fuel composition to a fuel injection device 26 in the engine(s) 28. The fuel injection device 26 may be any type of fuel injector, for example a fuel nozzle, airspray injector, or plain orifice. The fuel injection device 26 may comprise one fuel injector, or a plurality of fuel injectors. Although in Figure 1 only one fuel injector 26 is shown, each engine 28 may be fitted with a number of fuel injectors, each in fluid communication with the fuel blender 22.

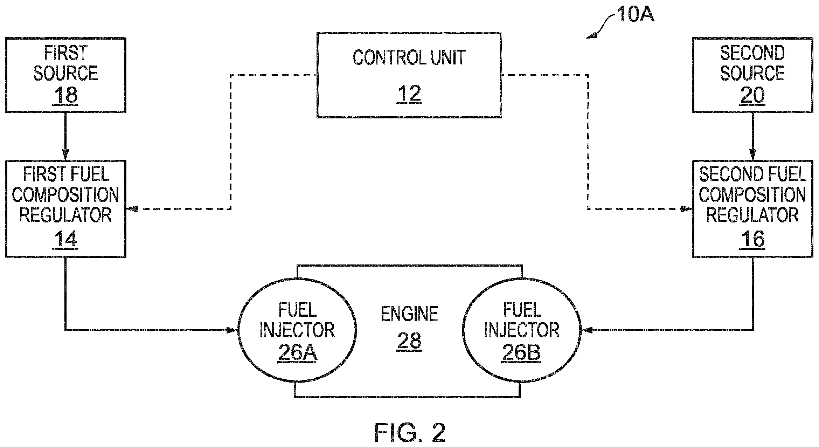

Figure 2 shows a diagrammatic representation of an alternative example of the fuel system 10A according to the present disclosure. Features common to the example shown in Figure 1 share the same reference numerals and will not be described again. The difference between the examples of Figures 1 and 2 is that the fuel blender 22 has been removed and the regulators 14 and 16 feed independently to the engine 28 by separate ducts. Thus mixing of the fuel compositions does not occur until fuel streams arrive at the engine 28. In this example, it is proposed that mixing may occur in the engine combustion chamber, e.g. under the turbulent flow conditions therein, which actively promote mixing. Thus, separate fuel injectors 26A and 26B are provided for each fuel composition. In other examples, the fuel stream may be combined into a common fuel stream/pipe upstream but without a specific fuel blender 22, such that mixing occurs passively in the pipe and/or upon passage through the fuel injector 26 and/or within the combustion chamber. In the event that a premixing chamber is present for mixing the fuel with air, this may beneficially also enhance the mixing of the fuel compositions.

In any such examples, it is possible that the fuel injectors could be of the same or different design/type, e.g. to accommodate different fuel types and/or according to the maximum likely flow rate that each injector is intended to accommodate. In one example an injector for a liquefied gas fuel type may be implemented.

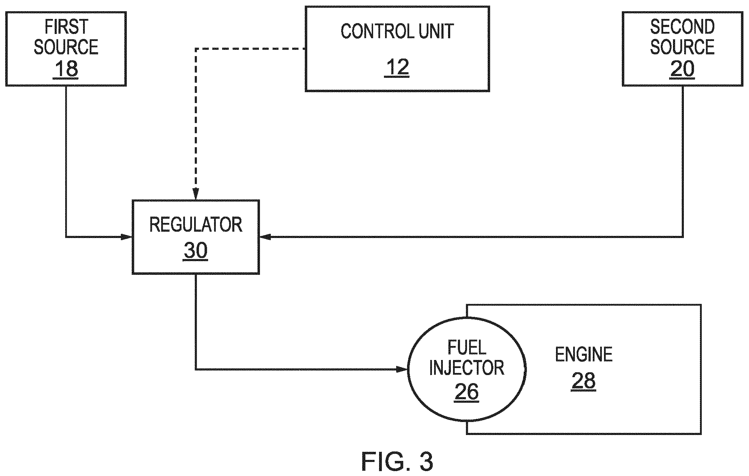

In Figure 3, a further possible fuel system configuration is shown, which accommodates an arrangement to switch between different fuel compositions rather than encouraging mixing thereof. Either example of Figures 1 and 2 could be operated in a fuel switching, rather than mixing, mode of operation. However, the fuel system has been simplified (thereby allowing possible cost and/or weight savings) in Figure 3 to accommodate fuel source switching.

In the example of Figure 3, a single regulator 30 is provided which is in fluid communication with the plurality of fuel sources 18, 20 (e.g. having multiple inlets). The regulator 30 admits input from only one of the fuel sources 18, 20 at any one time, for example at a rate corresponding to the entire engine fuel demand according to the engine operating requirements, such as thrust demands. In alternative arrangements, a regulator could be provided for each fuel source but could be operated by the controller 12 such that only one regulator admits fuel for delivery to the engine at any one time.

In any of the above examples, the regulator(s) and/or fuel blender may accommodate metering (i.e. flow rate control) of the fuel composition as well as selection of the final fuel composition make-up. In other examples, separate flow rate control devices may be implemented, i.e. in the flow path between any regulator/blender and the engine, in order to control the flow rate of the final fuel composition to the engine.

For the examples given above, the controller 12 is arranged to control the supply of fuel to the, or each, aircraft engine at a flow rate that is suitable to satisfy the thrust demands, and/or other operating requirements, of the engine 28. However the controller also comprises control instructions for determining a suitable fuel composition from the available fuel composition options within the plurality of tanks 18, 20 according to one or more further operating condition of the engine. The operating condition used for assessment of a suitable fuel composition may comprise one or more of the following: engine throttle setting and/or fuel-flow rate; height of the aircraft above ground level, which may be discretised into bands, for example of 100 feet; and/or position of the aircraft with regard to "sensitive" geographical areas, for example taking account of one or more of the prevailing wind direction, ambient relative humidity over water, whether ambient air is supersaturated with respect to ice. The sensitivity of a geographical area provides an indication of the perceived impact of engine PM emissions on contrail formation, and whether a contrail is likely to be a persistent contrail (that is that the contrail may continue to exist for a substantial period of time) or a short-lived contrail. An area may be perceived to be more sensitive if ambient air is supersaturated with respect to ice. Additionally or alternatively, an area may be perceived to be "sensitive" if a calculation of climate impact and/or human health impact arising from particulate matter emissions in that area produces a value which exceeds a pre-determined threshold per unit distance of aircraft travel. Said calculation may take account of the climate impact of contrails as well as more direct climate and/or human health impacts of particulate matter. Thus the controller will receive sensor signals from one or more sensor for said operating condition parameters.

The above identified operating condition parameters allow determination of one or more phases of a flight, or one or more portions of a phase, such that the final fuel composition can be varied by the controller according to each phase or portion in order to reduce the adverse environmental impact of the engine emissions in an effective manner with minimal or limited consumption of an alternative fuel.

A portion of a flight may be identified as a section of a flight in which one or more operating condition(s) do not change substantially/materially, for example in which the operating condition parameters do not cross one or more threshold or transition point indicative of a further portion or phase of the flight.

The different fuel compositions made available in the different fuel sources on the aircraft differ principally in their respective levels of aromatic content and/or sulphur content. One fuel composition, which may be a default fuel composition, may be entirely kerosene or a conventional blend of kerosene with a small percentage of an alternative fuel. The other fuel composition may comprise a significantly higher percentage of an alternative fuel or else may be entirely an alternative fuel. An alternative fuel in the context of the invention may be one or more of a biofuel, a sustainable aviation fuel, a power-to-liquid fuel, a gas-to-liquid (GTL) fuel, an e-fuel, liquefied natural gas, or hydrogen - or other fuel being relatively low in aromatics and/or other non-paraffinics compared to kerosene. The alternative fuel may be characterised by its production of relatively lower levels of particulate matter when burned in the engine, compared to the default fuel composition such as kerosene.

As provided above, when entirely kerosene, the fuel composition may comprise molecules from one or more of the chemical families of n-alkanes, iso-alkanes, cycloalkanes, and aromatics. When blended or mixed with an alternative fuel, the fuel may comprise renewable hydrocarbons produced from biological or non-biological resources, otherwise known as sustainable aviation fuel (SAF). In each of the provided examples, the fuel may comprise one or more trace elements including, for example, sulphur, nitrogen, oxygen, inorganics, and metals.

Functional performance of a given fuel composition, or blend of fuel for use in a given mission, may be defined, at least in part, by the ability of the fuel to service the Brayton cycle of the gas turbine engine 28. Parameters defining functional performance may include, for example, specific energy; energy density; thermal stability; and, emissions including particulate matter. A relatively higher specific energy (i.e. energy per unit mass), expressed as MJ/kg, may at least partially reduce take-off weight, thus potentially providing a relative improvement in fuel efficiency. A relatively higher energy density (i.e. energy per unit volume), expressed as MJ/L, may at least partially reduce take-off fuel volume, which may be particularly important for volume-limited missions or military operations involving refuelling. A relatively higher thermal stability (i.e. inhibition of fuel to degrade or coke under thermal stress) may permit the fuel to sustain elevated temperatures in the engine and fuel injectors, thus potentially providing relative improvements in combustion efficiency. Reduced emissions, including particulate matter, may permit reduced contrail formation, whilst reducing the environmental impact of a given mission. Other properties of the fuel may also be key to functional performance. For example, a relatively lower freeze point (°C) may allow long-range missions to optimise flight profiles; minimum aromatic concentrations (%) may ensure sufficient swelling of certain materials used in the construction of o-rings and seals that have been previously exposed to fuels with high aromatic contents; and, a maximum surface tension (mN/m) may ensure sufficient spray break-up and atomisation of the fuel.

The ratio of the number of hydrogen atoms to the number of carbon atoms in a molecule may influence the specific energy of a given composition, or blend of fuel. Fuels with higher ratios of hydrogen atoms to carbon atoms may have higher specific energies in the absence of bond strain. Fossil-based hydrocarbon fuels may comprise molecules with approximately 7 to 18 carbons, with a significant portion of a given composition stemming from molecules with 9 to 15 carbons, with an average of 12 carbons.

A number of sustainable aviation fuel blends have been approved for use. For example, some approved blends comprise blend ratios of up to 10% sustainable aviation fuel, whilst other approved blends comprise blend ratios of between 10% and 50% sustainable aviation fuel (the remainder comprising one or more fossil-based hydrocarbon fuels, such as Kerosene), with further compositions awaiting approval. However, there is an anticipation in the aviation industry that sustainable aviation fuel blends comprising up to (and including) 100% sustainable aviation fuel (SAF) will be eventually approved for use.

Sustainable aviation fuels may comprise one or more of n-alkanes, iso-alkanes, cyclo-alkanes, and aromatics, and may be produced, for example, from one or more of synthesis gas (syngas); lipids (e.g. fats, oils, and greases); sugars; and alcohols. Thus, sustainable aviation fuels may comprise either or both of a lower aromatic and sulphur content, relative to fossil-based hydrocarbon fuels. Additionally or alternatively, sustainable aviation fuels may comprise either or both of a higher iso-alkane and cyclo-alkane content, relative to fossil-based hydrocarbon fuels. In some examples, sustainable aviation fuels may comprise either or both of a density of between 90% and 98% that of kerosene and a calorific value of between 101% and 105% that of kerosene.

Owing at least in part to the molecular structure of sustainable aviation fuels, sustainable aviation fuels may provide benefits including, for example, one or more of a higher specific energy (despite, in some examples, a lower energy density); higher specific heat capacity; higher thermal stability; higher lubricity; lower viscosity; lower surface tension; lower freeze point; lower soot emissions; lower NOx; and, lower CO₂ emissions, relative to fossil-based hydrocarbon fuels (e.g. when combusted in the combustion equipment). Accordingly, relative to fossil-based hydrocarbon fuels, such as Kerosene, sustainable aviation fuels may lead to either or both of a relative decrease in specific fuel consumption, and a relative decrease in maintenance costs.

When identifying the flight phases, for which particulate matter (PM) engine emissions can be reduced to greatest environmental benefit, the cruise phase has been identified for different fuel composition control. In this regard, 'particulate matter' as referred to herein comprises smoke/soot derived from the carbon content of a fuel and/or other particles (e.g. due to sulphur content) directly emitted within the engine exhaust (i.e. in the combustion products) or created by downstream interactions, including interactions with constituents of the ambient air.

Following is a description of a method of determining the suitable final fuel composition for delivery to the engine(s), which may be performed by the controller 12 either in real-time during a flight or else in advance such that the controller merely instructs the predetermined fuel composition for delivery to the engine upon determining the cruise phase of the flight (by the received operating condition sensor signals). Thus the PM emissions profile across the cruise phase of an aircraft flight, or a portion thereof, is tailored to minimise total environmental impact arising from the particulate matter emissions and/or the gaseous emissions created by the combustion of said fuel.

Flight phases, or portions thereof, may be identified according to characteristic or predicted engine operating conditions occurring during said phases or portions. Within each phase or portion a PM impact function (i.e. a climate warming impact or 'cost' function) can be determined based upon any, any combination, or all of the following: the mass of PM emitted; the number of PM particles emitted; the particle size distribution of the PM emitted; the location-specific and/or time-specific impact of the emitted PM; the additional cost (versus that of 100% kerosene for example, or alternatively versus that of the default fuel composition available at the departure airport), of using the proposed fuel-composition within this phase or portion.

A summation of the impact/costs of all the portions falling within the cruise phase for the flight would then be performed in order to provide a total value. For example the cost function could simply assess the total mass of PM emitted during the cruise phase of a flight and apply a cost per kg of emitted PM to yield the total cost. Additionally or alternatively the cost function could take account of the number of particles emitted and apply a cost per million particles to yield the total cost. Additionally or alternatively, the cost function could take account of the climate impact of contrails formed during the cruise phase.

Additionally or alternatively, when performing a summation over the cruise phase, the cost function could apply a weighting to each portion reflecting the sensitivity of each geographical location. A sensitivity weighting could be defined to take account of the likely environmental impact of PM emissions taking place in that location. Additionally or alternatively a sensitivity weighting could take account of one or more of the prevailing wind direction, ambient relative humidity over water, whether ambient air is supersaturated with respect to ice. In any example, the weightings could undergo temporal variation, e.g. with air traffic, times of the day, weather changes, seasonal variation or other temporal/cyclic factors known to affect ambient relative humidity over water, and whether ambient air is supersaturated with respect to ice.

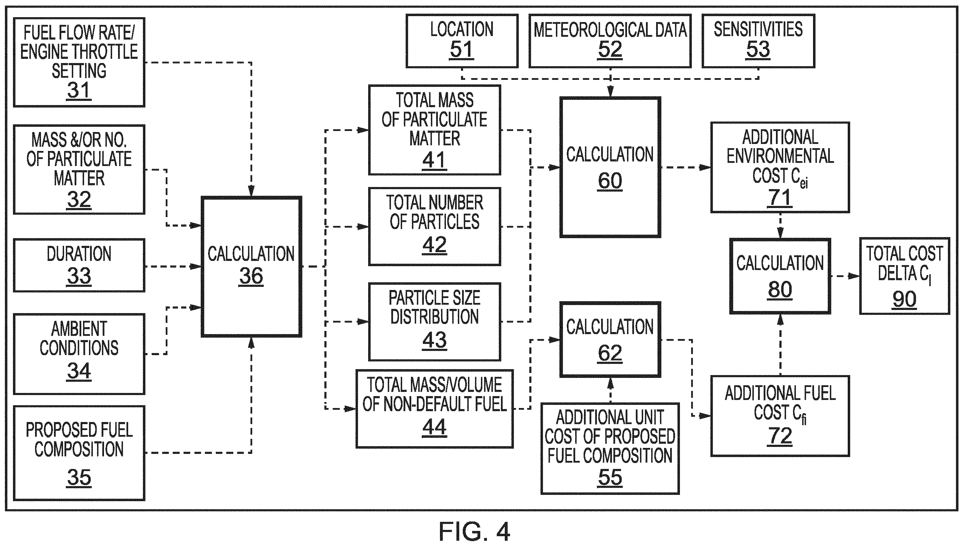

An example procedure for calculating the emissions cost/impact value for a proposed fuel composition in a phase or portion of a flight is shown in Figure 4.

Input 31 represents a signal indicative of fuel-flow rate and/or engine throttle setting for each engine.

Input 32 represents a model, database or lookup table from which can be calculated or otherwise determined the mass of PM emitted per unit mass of fuel burned (EIₘ) and/or the number of PM particles emitted per unit mass of fuel burned (EIₙ) for the fuel-flow rate 31 at the current ambient conditions (e.g. temperature, pressure) and aircraft Mach number. The calculation may take account of the further inputs of one or more ambient condition sensor 34 and/or the proposed fuel composition 35. The model, database or look-up table may be engine-specific or engine-type specific.

The EIₘ or EIₙ for each available fuel composition is an important consideration of the invention and may be referred to herein as the particulate matter emission index value.

Input signal 33 is a time signal or estimation representative of the time-duration of the phase or portion.

Stage 36 represents a calculation step or algorithm which uses items 31-35 to determine, for this phase or portion of the phase: optionally, the total mass 41 of particulate matter emitted; the total number 42 of particles emitted; optionally, the particle size distribution 43 of the emitted PM; the total mass and/or volume 44 of non-default fuel required.

Further inputs 51-53 may be used in conjunction with the outputs of stage 36 to determine the impact of the PM emissions and the corresponding 'cost' value at stage 60. Input 51 is a representation of the location of the phase or portion, which may include geographical location (latitude and longitude) and/or altitude. Optional input 52 is a source of meteorological data from which can be obtained, or derived, parameters including one or more of wind velocity and direction, ambient temperature and pressure, ambient relative humidity over water and over ice. It will be appreciated that many of these parameters are required not only along the aircraft's flight track at the moment the aircraft passes through a region of airspace, but also for a period of many hours after the aircraft has passed, in order to track the distribution and/or evolution of any emitted particulate matter and/or formed contrail. Optional input 53 is a representation of the position-dependent and time-dependent sensitivities to PM and/or contrails of areas into which emitted PM, or over which formed contrails, may travel or be carried by prevailing winds.

The output of calculation 60 is a signal 71 representing the calculated additional cost Cₑᵢ of the environmental impact of the PM emissions in this phase or portion due to use of the proposed fuel composition in this phase or portion, relative to the cost of the environmental impact of the PM emissions that would take place in the same phase or portion when using the default fuel composition. It will be appreciated that negative values of Cₑᵢ represent an assessment that use of the proposed fuel composition results in an advantageous improvement in environmental impact for this phase or portion relative to use of the default fuel composition.

It will be appreciated that the calculation 60 may comprise a detailed assessment of the climate impact of any contrail or contrails formed during the phase or portion, taking account of the evolution of the one or more contrails over a time period (such as a few hours or a day) following formation of said one or more contrails. The result of said assessment of contrail climate impact may be expressed using any one or more of the following metrics: energy forcing (EF); radiative forcing (RF); effective radiative forcing (ERF); average temperature response (ATR); or any other suitable metric. It will further be appreciated that in the absence of contrail formation, or following contrail formation and subsequent sublimation, emitted particulate matter may exert further climate impacts and/or human health impacts, which the calculation 60 may include within its scope. A metric-specific tariff may be used to convert the chosen metric into a financial cost to enable easy comparison alongside other sources of cost.

In a practical implementation of the invention, the actual cost in terms of the price of the proposed fuel composition will need to be accommodated in order to generate a useable outcome for the aircraft operator. This is achieved by a further calculation 62 of the additional fuel cost C_{fi} for this phase or portion of using the proposed fuel composition rather than the default fuel composition. This calculation has as its inputs signals 44 (described above) and 55, which is a representation of the additional cost of fuel, per litre (or per kilogram), relative to the default fuel composition, of the proposed fuel composition.

Calculation 62 outputs a signal 72 representing the additional fuel cost C_{fi} - thus the change or delta in fuel cost for the phase or portion associated with use of the proposed fuel composition in place of use of the default fuel composition.

80 represents a calculation step which combines the additional environmental (PM) cost signal 71 and the additional fuel cost signal 72 to yield a total additional cost, or total cost delta, Cᵢ for this phase or portion. In one non-limiting example, the combination method could be a simple addition. In another non-limiting example, the combination method could be a weighted summation. In yet another non-limiting example, the combination method could ignore completely the additional fuel cost C_{fi} and take account only of the additional environmental cost Cₑᵢ. Output 90 is a signal representing the total additional cost, or total cost delta, Cᵢ for this phase or portion, which provides a single tradable attribute which can be compared to and/or combined with the corresponding additional cost output(s) for other flight portions. It will be appreciated that a negative value of the total additional cost, or total cost delta, Cᵢ would represent an assessment that overall advantage may be obtained within this phase or portion by using the proposed fuel composition in place of the default fuel composition. Conversely, it will be appreciated that a positive value of the total additional cost, or total cost delta, Cᵢ would represent an assessment that overall disadvantage arises within this phase or portion by using the proposed fuel composition in place of the default fuel composition.

Thus, in view of the above example of a calculation routine, knowledge of (proposed) fuel composition, engine operating point, engine combustor characteristics, fuel flow rate, duration of the phase or portion etc: the following outputs may be calculated, estimated or otherwise determined (e.g. through use of a lookup-table or database):
∘ Amount of non-default fuel required for this phase or portion
∘ The change in fuel cost C_{fi} within this phase or portion due to using the proposed fuel composition rather than the default fuel composition
∘ The change in environmental cost Cₑᵢ within this phase or portion due to using the proposed fuel composition rather than the default fuel composition.

For phases lying outside the cruise phase then the emissions-related additional cost Cₑᵢ may be set to zero irrespective of fuel-composition, while the fuel-related additional cost C_{fi} may still be non-zero, except in the case where the proposed fuel-composition for that phase is equal to the default fuel composition. In this way the use of expensive fuel outside the cruise phase may be discouraged.

It will be appreciated that in some examples, the proposed fuel-composition and/or a blend of kerosene and the proposed fuel-composition thereof may also be used in the LTO cycle for air quality improvement purposes on departure until the aircraft exceeds a predetermined threshold altitude (for example, 3000 feet) relative to the departure airport. Additionally or alternatively, in some examples, the proposed fuel-composition and/or a blend of kerosene and the proposed fuel-composition thereof may also be used in the LTO cycle for air quality improvement purposes e.g. during arrival once the aircraft descends to less than a predetermined threshold altitude (for example, 3000 feet) relative to the arrival airport.

The above cost calculation is repeated for each phase or portion and the total flight cost, or cost delta, is simply the sum, over all the phases or portions, of the weighted additional cost for each phase or portion.

Using the above procedure repeatedly for different proposed distributions of fuel-compositions over the cruise phase will enable an optimised fuel composition solution to be identified in terms of additional PM cost and fuel cost. In a further development of the concept, the cost function could take account of the particle size distribution in determining the impact of emissions, using knowledge of the dependence upon the particle size distribution of contrail characteristics such as optical depth and lifetime.

Upon determination of the optimal fuel composition for each phase or portion of the cruise phase, the controller 12 of the fuel delivery systems of any one of Figures 1-3 could implement the appropriate fuel composition upon detection of the operating conditions indicative of the relevant flight phase or portion. One of two alternative modes of operation can be used to determine the optimum distribution of fuel compositions across the various phases or portions of a flight. Either it could be assumed that a fixed amount of alternative fuel is available for the flight and the minimum cost distribution of that fixed amount can be found (e.g. by iterative searching/convergence) between phases or portions of the flight, assuming the necessary quantity of the default fuel composition is available to make up the total fuel requirement for the flight as a whole. Alternatively, the optimal-cost fuel-composition for each phase or portion of the flight could be determined, and then combined by summation over the phases or portions of the amount of alternative fuel required for each phase or portion, to yield the optimum quantity of alternative fuel required for that flight. The balance of fuel required to achieve the flight is then supplied as the default fuel composition.

The controller 12 could implement the above calculations in advance of a flight in order to prescribe a fuel composition script for the flight and/or during a flight to update the final fuel compositions according to current conditions. However, another embodiment, which is in many ways preferred, comprises a ground-based facility, such as a fleet control centre, at which the computationally expensive calculations are performed in advance, such that a resulting fuel composition script is transmitted to the controller 12 on board the aircraft prior to a flight. The controller would thus enact the script by adjusting the final fuel composition delivered to the engine(s) upon detection of the operating conditions indicative of a flight phase or portion prescribed by the script, such as any or any combination of engine thrust level, geographical location (e.g. by GPS) and/or altitude. Possible deviations from a prescribed script by a controller are discussed below. If the scripting calculations are performed by the aircraft controller, the output may be communicated to the ground-based controller.

Whilst the above-described system allows useful determinations of fuel composition for the flight phases or portions, and the required volumes of different fuel compositions to be loaded on an aircraft for a given flight, it must be considered that the relatively expensive alternative fuel composition may need to be optimally distributed across a number of flights and/or aircraft (e.g. across a fleet of aircraft) in order to achieve the most effective PM reductions for the available alternative fuel supplies. The term `flight' as used herein may thus refer to a single flight or a number of flights between consecutive aircraft refuelling.

In one embodiment, an optimisation algorithm, typically implemented within a ground-based controller, is used to find the best distribution of the available supply of alternative fuel(s) across a plurality of planned flights for a number of aircraft in a fleet. In this regard, the additional environmental cost 71 and additional fuel cost 72 output by the flight optimisation algorithm, either separately or in combination (i.e. total additional cost 90), could be used to compare the contrail formation benefits gained from the use of alternative fuels for different flights and/or cruise phases or portions across the fleet of a number of flights per aircraft. Thus the tradeable cost attributes become an important factor is coordinating an optimal alternative fuel distribution for loading onto aircraft within the fleet.

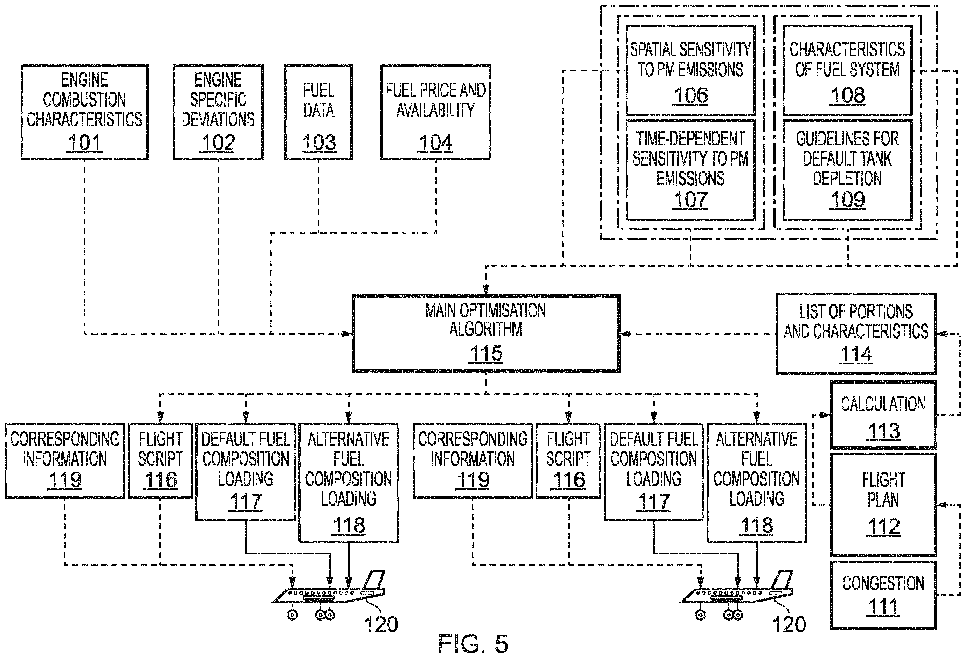

Figure 5 shows a ground-based system, e.g. at the departure airport, which determines how the alternative fuel should best be distributed between a number of different aircraft in order to manage the total impact of PM emissions across the fleet. Arrows with dashed lines indicate signal communication (e.g. wires or radio signals), while arrows with solid lines indicate fluid communication (e.g. fuel-pipes).

In the following description, the term "fleet" is used to refer to one or more aircraft, collectively performing a plurality of flights departing from for example a single airport or a single airport terminal, each of whose pre-flight fuel-loading period lies within a time period defined by for example one or more banks of operations or one or more calendar days or one or more calendar weeks, or a time period between two events, for example two consecutive fuel delivery events, for example two consecutive deliveries of alternative fuel.

101 represents a stored resource such as a computational model, lookup-table or database detailing engine combustion characteristics for each engine type in the fleet, based on engine specifications and/or embodying the results of measurement campaigns. The stored resource 101 enables the EIₘ and/or EIₙ to be determined, as a function of fuel-composition, fuel-flow rate or throttle setting, and engine operating point (ambient temperature, engine internal temperatures etc).

102 represents a further optional input and comprises information on any engine-specific deviations from the type-specific relationship embodied in 101, such deviations having been established from in-service observations using sensors on the planes within the fleet.

103 is a stored resource (e.g. database) of fuel data, e.g. comprising the properties of the distinct fuel compositions available for loading onto aircraft. Alternatively, 103 could comprise fuel composition identification data (e.g. by name or by certification standard) for the fuel compositions actually available for loading, such that their properties can be retrieved from another resource.

104 is a source of data detailing the prices of each of the available fuel compositions, and the available quantity of each.

106-109 represent a single or multiple stored resources (e.g. model, lookup-table or database) or other data sources of factors affecting the sensitivity of the geographical locations to PM emissions and/or contrail formation. In this example, input 106 embodies the spatial sensitivity, and input 107 embodies the time-dependent sensitivity to PM emissions within the cruise phase, or a portion thereof. Optional input 108 represents characteristics of the fuel system (e.g. fuel tank capacities) and optional input 109 represents guidelines for default fuel tank depletion (e.g. centre tank first then wing tanks).

113 represents a determination of the relevant portions of planned flights, i.e. sub-dividing proposed flights and/or the cruise phase into portions, such as specific cruise portions, which may, by way of example, be carried out as follows:
∘ Define as the scope of this procedure the period of use between the next refuelling and the subsequent refuelling
∘ Identify all transition-points at which the aircraft/engine operating point changes substantially/materially
∘ Divide the flight and/or the cruise phase up into portions, each of which lies between two temporally-adjacent transition-points identified in the previous step
∘ Optionally, for simplicity, any contiguous period within a single flight during which the altitude above ground level is less than 3000ft (or some other pre-determined value) could be considered as being a single portion.

The calculation 113 will typically take account of the intended flight-plan of the aircraft between its next refuelling and the subsequent refuelling, as embodied by data input 112. Data input 112 may include knowledge of ambient relative humidity over water, and whether ambient air is supersaturated with respect to ice, intended route, and/or the expected engine throttle settings to be employed at each portion of the flight.

The output of 113 is thus 114, a list of portions and their respective characteristics, such as values or ranges of the following: engine throttle setting and/or fuel flow rate; duration; aircraft location (position and altitude); and/or time of day.

An optional input into determination 113 (e.g. via input 112) comprises input 111, a data resource comprising details of likely congestion to be encountered at particular times of day, which may impact the duration of flight portions.

115 represents the main optimisation algorithm (or other means of calculation) which distributes the available amount of alternative fuel between the various flights and between the phases or portions of each flight and/or which may adjust the intended volume of alternative fuel to be used. To achieve this, the algorithm may use the calculation method described above in relation to Figure 4. That function is invoked for each phase or portion of each flight to calculate the total additional cost, or cost delta, associated with a proposed distribution of fuel between all phases or portions of all the planned flights for the fleet. To simplify the search through possible distributions of alternative fuel, the initial distribution may be constructed taking account of any or any combination of: the sizes of the aircraft and their likely take-off weights; the lengths of their respective flights; and/or an estimate of the proportion of total fuel burn that will take place within portions of the cruise phase. For each flight lying within scope of the optimisation, the main optimisation algorithm calculates the cost-optimal distribution of alternative fuel across the various phases or portions of the flight, constrained by the amount of alternative fuel available for that flight.

The optimisation process 115 may optionally be implemented as two nested optimisation loops, the outer loop proposing distributions of alternative fuel between flights, and the inner loop performing a complete optimisation within a flight of the distribution of alternative fuel between phases or portions of that flight. This may help to speed up the overall search process.

The optimisation process 115 outputs for each aircraft, a script 116 specific to each aircraft's next flight, which is communicated to each aircraft and which specifies the transition points between each phase or portion and the fuel composition to be used within each phase or portion of the aircraft's next flight. The optimisation process also outputs fuel-loading instructions in the form of volumes of both the default fuel composition 117, and the one or more alternative fuel compositions 118 for each aircraft. The aircraft 120 is also supplied with corresponding information 119 which will enable its controller 12 to re-calculate if necessary during the flight the optimal distribution of alternative fuel between remaining phases or portions, as discussed in the following section.

Each aircraft 120 is then loaded with the amount of fuel specified for each fuel type in the loading instructions 117 and 118.

In summary, as described above, the summation of additional environmental impact costs and additional fuel composition costs is performed over all the flights to find the total additional cost, or total cost delta, of the proposed distribution across flights. The optimisation algorithm explores, e.g. iteratively, alternative distributions, favouring flight phases or portions where it is determined that relatively more favourable ratios of fuel cost to PM climate impact reduction exist, and assesses the total additional cost, or total cost delta, associated with each explored distribution.

The iterative searching process is repeated until a pre-determined criterion is met, such as: a desired total additional cost, or total cost delta, threshold has been reached; or a predetermined number of proposed distributions has been explored; or the lowest-additional-cost distribution discovered so far has not been improved for a pre-determined number of iterations; or the rate of improvement (averaged over previous iterations) in the best distribution discovered so far has fallen below some pre-determined threshold. Other termination criterion as would be known to the skilled person familiar with the subject of function optimisation may be employed.

The best distribution between flights that was discovered within the iterative process is then selected and implemented.

During implementation, i.e. as fuelling is carried out or during flights, i.e. as a result of changes to flight phases or portions or assumptions which deviate from the calculated script, it may be necessary to recalculate those parts of the script that relate to any phases or portions of the flight that have not yet been completed. For instance if, during the course of a flight of several hours duration, the weather conditions (including ambient relative humidity over water, and whether ambient air is supersaturated with respect to ice) and/or air traffic congestion over the intended route change materially, then certain inputs/conditions resulting in the initially deployed script may warrant an updated approach. It will therefore be necessary to recalculate the fuel composition distribution for the remaining phases or portions of a flight in order to determine an updated optimal use of the remaining fuel on-board. In other words, the script for the remainder of the flight will need to be recalculated.

In one example, limited or no recalculation could be undertaken, such that, once an upper threshold volume of alternative fuel for each phase or portion has been consumed, the controller may simply supply the default composition until the next phase or portion is reached. In another example, the controller may instigate a simplified or constrained recalculation of the script, in which the total available volume of alternative fuel for that flight is fixed or capped, such that the remaining alternative fuel may be assigned most effectively (e.g. for weighted PM climate impact reduction) within the expected duration of the remaining phases or portions. In another, more complex re-calculation, the controller (whether aircraft or ground based) may consider the impact on planned future flights and may recalculate the fuel distribution across those flights.

In more sophisticated embodiments, and potentially dependent on the severity of any changes to initial scripts, the recalculated fuel composition distribution for an aircraft may be fed back into the fleet calculations. The fuel distribution planning for the fleet may be updated accordingly to redistribute fuel compositions supplied across the fleet most effectively by rerunning the calculation processes described above. A communication channel between each aircraft and the central ground-based controller would thus be beneficial for communication of any script changes either in flight or at the end of each flight. If an in-flight communication channel is used, any recalculation could be carried out at the ground-based facility and transmitted to the aircraft which would update or replace its existing script using the received information. This may ensure that the fleet fuel distribution remains optimal in real-time.

Also, it might be necessary for a small contingency of alternative fuel to be delivered to each aircraft to accommodate deviations from the expected flight plan or script. Furthermore, it is possible that script changes could result in a surplus of alternative fuel being retained by the aircraft at the time of next refuelling, which may be fed back into the fleet model.

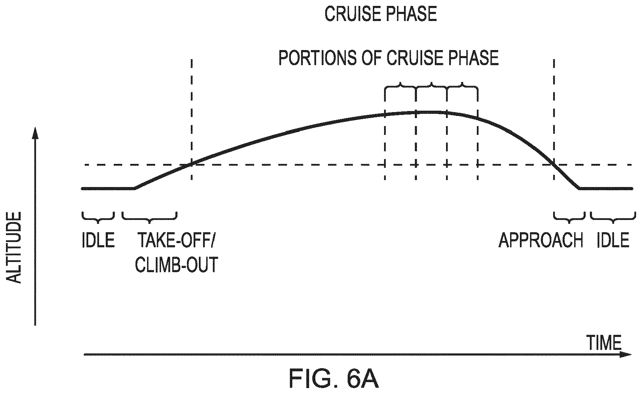

Turning now to Figures 6A-6C, it is to be understood that a standard landing and take-off (LTO) cycle can be defined at altitudes below 3000ft (shown as the dotted line in Figures 6A-6C) relative to the altitude of the airport, as consisting of 4 stages:
∘ Approach: 4 minutes at 30% thrust
∘ Idle: 26 minutes at 7% thrust
∘ Take-off: 0.7 minutes at 100% thrust
∘ Climb-out: 2.2 minutes at 85% thrust.

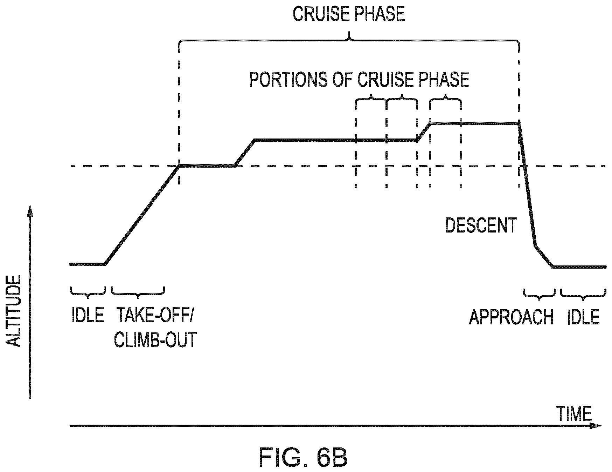

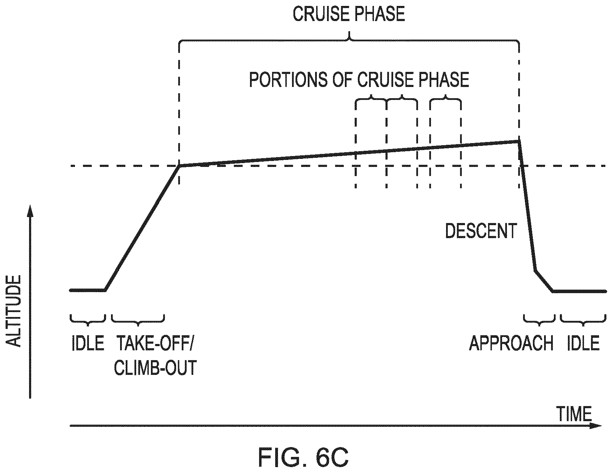

This definition or any part thereof may be used to identify the cruise phase, or one or more portions thereof, in accordance with the invention, with example trajectories illustrated in Figures 6A-6C. Figure 6A shows an example of the cruise phase with a trajectory which varies in altitude over the duration of the cruise phase. Figure 6B shows an example of the cruise phase with two or more at least substantially constant altitude/ level cruise portions and step-climbs over the duration of the cruise phase (e.g. three at least substantially constant altitude/ level cruise portions and two step-climbs over the duration of the cruise phase, as shown in the specific example of Figure 6B). Figure 6C shows an example of the cruise phase with at least a substantially steady state/ continuous cruise-climb over the duration of the cruise phase.

In any example of the invention it will be appreciated that the duration of the relevant phases or portions and/or thrust thresholds and/or altitudes may be varied according to actual parameters experienced and/or in order to focus on the aim of PM climate impact reduction to improve contrail management - e.g. allowing contrail formation to be selectively reduced or increased according to requirements.

It will be appreciated that, at least for medium-haul and long-haul flights, fuel-burn at cruise conditions represents a significant proportion of total fuel-burn. Furthermore, contrail formation and/or persistence is generally less likely at non-cruise conditions, thus cruise conditions represent the greatest opportunity to affect contrail climate impact. Thus, the management of fuel compositions supplied to an engine during one or more portions of the cruise phase of a flight has greater potential to exert a significant effect over contrail climate impact, relative to management of fuel compositions supplied to the engine during one or more portions of non-cruise phases of a flight.

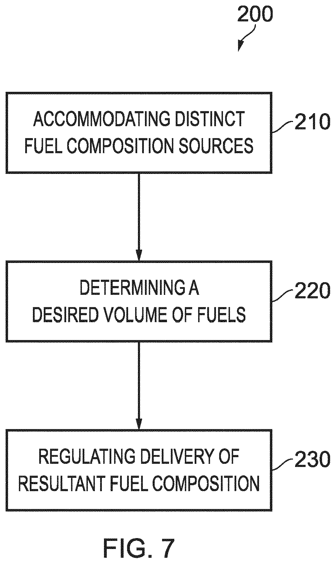

As shown in Figure 7, there is provided a method of controlling fuel delivery to an aircraft engine. This method 200 includes, a first step 210 of accommodating a plurality of distinct fuel sources on an aircraft. The method continues by way of a second step 220 of determining a desired volume of fuels from the plurality of fuel sources to be supplied to the engine during at least a portion of the cruise phase relative to a further portion of the aircraft flight in dependence upon at least one engine operating condition for each of said portions. The method further includes a third step 230 of regulating delivery of a resultant fuel composition from said plurality of fuel sources to the engine such that the resultant fuel composition is varied between said portion of the cruise phase and said further portion of the flight. The volume of fuels from the plurality of fuel sources is selected for supply to the engine at least in part based upon the particulate matter emissions created by the combustion of said fuel.

In further developments it is proposed that one or more sensor could be provided on each engine or aircraft within the system of the present invention which provides a signal indicative of the levels of particulate matter (PM) being produced by each engine, e.g. in real-time during engine operation. Rather than predicting PM emissions for a given engine based on the engine specification, the actual PM emissions could be determined and the impact of the invention could be determined. The actual PM emissions could be fed back to the calculations performed by the controllers, as described above, to provide a more accurate assessment of the environmental and fuel costs for that engine. Thus alternative fuel resources could be distributed unevenly between engines of the same type, where it can be seen that the relative PM emissions reduction would be different for those engines. In such embodiments, it may be beneficial if a regulator is provided for each fuel type for each engine, and a dedicated blender for each engine.

In another example of a modification to the systems and methods described above, it is possible that the fuel compositions supplied to an aircraft could be queued in a predetermined sequence using fluidly interconnected fuel tanks. Thus a predefined sequence of fuel compositions for delivery to the engine could be loaded in the different fuel tanks and the controller could simply control a regulator to admit fuel from a particular tank for each cruise phase or portion thereof.

In an envisaged deployment of the invention, the primary or default fuel would be kerosene and the alternative fuel(s) would be relatively lower in aromatic and/or other non-paraffinic content. The alternative fuel may have an aromatic content of e.g. 30%, 20%, 15%, 10%, 8%, or 5% or less, for example 4%, 3%, 2%, 1% or less, for example 0.75%, 0.5%, 0.25% or less, for example 0.2%, 0.1% or less, for example 0%. The aromatic content of the alternative fuel may be in an inclusive figure or range bounded by or within any two of the values in the previous sentence (i.e. the values may form upper or lower bounds), for example 13.5%, 8.5%, 2.5%, 0.35%, 0.15%, 0.05%, 0.005%, or 0%; or 0% to 0.75%, 0% to 0.5%, or 0.1% to 0.25%; or 0.15% to 0.65%, 0.35% to 0.55%, or 0.035% to 0.055%, according to one or more of preference, fuel stock or supplier, or compositional variation therein.

In any example of the invention, a lower threshold of prolonged safe aromatic content may be prescribed. However the controller may allow the aromatic content of the fuel mix delivered to the engine to fall below the lower threshold value either instantaneously or periodically (e.g. within certain cruise phases or portions) in order to achieve a reduced level of exhaust emissions, provided the average aromatic content for each entire flight (or a series of flights) remains above said lower threshold.

In summary, the invention allows for a fuel delivery system in which a fuel delivery controller (either aircraft or ground-based) determines what proportion of the fuel loaded onto each aircraft and/or delivered to each engine in use should be in the form of an alternative fuel composition rather than the default fuel composition. The calculations and relevant control instructions may be determined to optimally use the alternative fuel for PM climate impact reduction during the cruise phase or a portion thereof, across one or more flights of a single aircraft and/or a plurality of flights (e.g. spanning a predetermined time window) by a plurality of aircraft.

## Claims

1. A fuel delivery system (10) for an aircraft engine, the system comprising a fuel delivery regulator (14,16,30) configured to receive fuel from a plurality of fuel sources (18,20) for supply to the engine, an engine operating condition sensor, and a control unit (12) configured to control operation of the regulator, wherein the control unit is configured to actuate the regulator based on a received signal from the engine operating condition sensor in order to vary the volume of fuels from the plurality of fuel sources supplied to the engine during at least a portion of a cruise phase relative to a further portion of an aircraft flight.

2. A fuel delivery system according to claim 1, wherein the volume of fuels from the plurality of fuel sources is selected for supply to the engine at least in part based upon the particulate matter emissions and/or the gaseous emissions created by the combustion of said fuel.

3. A fuel delivery system according to claim 1 or 2, wherein each fuel source comprises a different fuel composition, said fuel compositions each comprising a different aromatic and/or other non-paraffinic content.

4. A fuel delivery system according to any preceding claim, wherein a first fuel source (18) comprises a default fuel, such as kerosene, and a second fuel source (20) comprises one or more of a biofuel, a sustainable aviation fuel, a power-to-liquid fuel, a gas-to-liquid fuel, an e-fuel, liquefied natural gas, or hydrogen.

5. A fuel delivery system according to any preceding claim, wherein the control unit is configured to actuate the regulator based on the received signal from the engine operating condition sensor in order to vary the volume of fuels from the plurality of fuel sources supplied to the engine during at least a portion of the cruise phase relative to a further portion of the cruise phase.

6. A fuel delivery system according to any preceding claim, wherein varying the volume of fuel supplied from the fuel sources comprises varying the flow rate and/or ratio of the fuels from said fuel sources.

7. A fuel delivery system according to any preceding claim, wherein varying the volume of fuel supplied from the fuel sources comprises switching between the fuel sources.

8. A fuel delivery system according to any preceding claim, wherein a calculation of predicted particulate matter emissions and/or predicted gaseous emissions by the engine over one or more portions of the cruise phase is carried out based upon one or more predicted engine thrust settings, said calculation being used to calculate a total climate warming impact and/or determine the volume of at least one of the plurality of fuels to be delivered to the engine over the one or more portions of the cruise phase.

9. A fuel delivery system according to any preceding claim, wherein one or more portions of the cruise phase are defined according to changes in one or more engine operating condition therebetween such that each portion of the cruise phase is bounded by at least one threshold engine operating condition value.

10. A fuel delivery system according to claim 9, wherein a summation of the predicted particulate matter emissions and/or the predicted gaseous emissions by the engine over one or more portions of the cruise phase is performed and a proposed or default distribution of the first and/or second fuel sources over the cruise phase is amended in order to reduce the total of said summation.

11. A fuel delivery system according to claim 10, wherein the available volume of one of the plurality of fuels has an upper limit or cost associated therewith and the proposed distribution is amended to maximise the particulate matter emission reductions and/or the gaseous emission reductions for one or more portions of the cruise phase within a cap defined by said volume limit and/or fuel cost.

12. A fuel delivery system according to any one of claims 9 to 11, wherein the particulate matter engine emission value is weighted in dependence upon any or any combination of geographical, temporal or environmental considerations relative to one or more portion of the cruise phase.

13. A fuel delivery system according to any one of claims 9 to 12, wherein a predetermined script of fuel compositions to be supplied to the engine for one or more portions of the cruise phase is generated in advance of the flight for implementation by the control unit during the flight.

14. A fuel delivery system according to any one of claims 9 to 13 wherein a calculation of the required volumes of the plurality of fuel types for a planned flight is calculated by, or delivered to, a ground-based fuel supply system controller.

15. A method (200) of controlling fuel delivery to an aircraft engine comprising:
accommodating a plurality of distinct fuel sources on an aircraft (210); determining a desired volume of fuels from the plurality of fuel sources to be supplied to the engine (220) during at least a portion of a cruise phase relative to a further portion of an aircraft flight in dependence upon at least one engine operating condition for each of said portions; and regulating delivery of a resultant fuel composition from said plurality of fuel sources to the engine (230) such that the resultant fuel composition is varied between said portion of the cruise phase and said further portion of the flight.
